# FASCICULE DE BREVET EUROPEEN

(11) **EP 2 165 340 B1**
(45) Date de publication et mention de la délivrance du brevet: **05.06.2013**
(21) Numéro de dépôt: 08785969.0
(22) Date de dépôt: 08.07.2008
(51) Int. Cl.: G21C 19/07, G21F 5/00, G21F 5/005, G21F 5/12

(54) **EMBALLAGE DE STOCKAGE LONGUE DURÉE À FOND AMOVIBLE**
BEHÄLTER ZUR LANGZEITLAGERUNG MIT ABNEHMBAREM BODENTEIL
CONTAINER FOR LONG-TERM STORAGE WITH REMOVABLE BASE

(30) Priorité: 10.07.2007 FR 0756383
(43) Date de publication de la demande: 24.03.2010
(73) Titulaire: Transnuclear, Inc., Columbia, MD 21045 (US); TN International, 78182 Montigny Le Bretonneux (FR)
(72) Inventeur: GRUBB, Robert L., Ellicott City Maryland 21043 (US); BONDRE, Jayant R., Clarksville, Maryland (US); WATTEZ, Lise, 84420 PIOLENC (FR)
(74) Mandataire: Ilgart, Jean-Christophe
(86) Numéro de dépôt international: PCT/EP2008/058852
(87) Numéro de publication internationale: WO 2009/007367

(56) Documents cités:
- WO-A-2007/017519
- US-A- 4 780 269
- US-A1- 2003 194 042

## Description

### DOMAINE TECHNIQUE

La présente invention se rapporte de façon générale à un emballage de stockage longue durée destiné à recevoir un étui contenant des matières radioactives, tels que des assemblages de combustible nucléaire irradiés, des déchets nucléaires, etc.

L'invention concerne également un site de stockage longue durée pour matières radioactives, comprenant une pluralité d'emballages de stockage longue durée logeant chacun un étui contenant des matières radioactives, et étant entreposé dans une position verticale avec le couvercle de tête amovible orienté vers le haut.

Elle porte en outre sur un procédé de transfert d'un étui contenant des matières radioactives, d'un emballage de transfert vers un emballage de stockage longue durée.

### ÉTAT DE LA TECHNIQUE ANTÉRIEURE

Lorsqu'un assemblage de combustible nucléaire a été irradié suite à son utilisation dans une centrale nucléaire, il peut être placé dans un conteneur étanche appelé étui avant d'être stocké sur une période longue, de vingt à soixante ans, par exemple dans un site de stockage, également dénommé site d'entreposage longue durée.

Pour assurer le transport de l'étui vers le site de stockage, l'étui est tout d'abord placé dans un emballage dit emballage de transport ou emballage de transfert, afin de former un ensemble appelé colis. La tête de l'étui se retrouve alors agencée au niveau de l'extrémité haute de l'emballage de transfert. En effet, les opérations de chargement des assemblages de combustible dans l'étui, d'une part, et de l'étui dans l'emballage de transfert, d'autre part, sont réalisées sous eau,en piscine, à la verticale. Comme il n'est pas envisageable de retourner l'étui lorsque celui-ci est chargé des assemblages de combustible pour que la tête de l'étui se retrouve en partie basse, il est donc impossible d'introduire l'étui dans l'emballage de transfert avec la tête de l'étui orientée vers le bas.

C'est ensuite l'intégralité du colis qui est acheminé vers le site de stockage sur lequel il est mis en oeuvre un procédé de transfert de cet étui de l'emballage, vers un logement de réception. Ce logement de réception peut être prévu au sein d'un emballage de stockage longue durée, ou encore au sein d'un module en béton tel que cela est connu du document US 4 780 269. Ce dernier cas est intéressant en ce sens qu'il offre un logement de réception horizontal, facilitant le procédé de transfert de l'étui. En effet, il est habituellement prévu d'aligner l'emballage de transfert intégrant l'étui avec le logement de réception du module de béton tous deux agencés horizontalement, puis de tirer ou de pousser sur cet étui afin de le transférer de son logement d'emballage vers son logement de réception associé. Cette technique de transfert est aussi connue du document US 4 780 269.

L'inconvénient majeur d'une telle réalisation réside dans le fait que le transfert horizontal de l'étui dans le logement du module de béton s'effectue avec la tête de l'étui orientée vers l'avant dans le sens de déplacement de l'étui, de sorte que cette tête d'étui se retrouve agencée en fond de module de béton, une fois le transfert achevé. Par conséquent, la tête de l'étui, sur laquelle il y a éventuellement lieu d'intervenir durant la longue période de stockage au sein du module de béton, devient très difficilement accessible aux opérateurs.

### EXPOSÉ DE L'INVENTION

L'invention a donc pour but principal de proposer un emballage de stockage longue durée dont la conception permet de remédier à l'inconvénient mentionné ci-dessus, relatif aux réalisations de l'art antérieur.

Pour ce faire, l'invention a tout d'abord pour objet un emballage de stockage longue durée destiné à recevoir un étui contenant des matières radioactives, ledit emballage comportant un corps latéral délimitant une cavité pour recevoir l'étui, ledit corps d'emballage étant fermé à son extrémité haute et à son extrémité basse respectivement par un couvercle de tête amovible, et par un fond d'emballage. Selon l'invention, ledit fond d'emballage prend la forme d'un couvercle de fond amovible, permettant l'introduction de l'étui, de préférence à l'horizontale, par l'extrémité basse dudit corps d'emballage, avec la tête de l'étui orientée vers l'avant dans le sens de déplacement de celui-ci.

Un tel couvercle de fond amovible rend possible l'introduction de l'étui par l'extrémité basse du corps d'emballage, avec la tête de l'étui orientée vers l'avant dans le sens de déplacement de l'étui. Par conséquent, une fois le transfert de l'étui achevé, sa tête se retrouve agencée au niveau de l'extrémité haute de l'emballage de stockage, la rendant particulièrement accessible en vue d'éventuelles interventions de manutention / contrôle durant la longue période de stockage.

Comme évoqué ci-dessus, l'étui logé au sein d'un emballage de transfert à fond fixe peut être chargé à l'horizontale dans l'emballage de stockage selon l'invention, avant que ce dernier ne soit pivoté pour adopter une position verticale de stockage longue durée, avec la tête de l'étui située au niveau de la tête de l'emballage, grâce au chargement de l'étui par le fond de cet emballage.

Par conséquent, l'invention se révèle particulièrement adaptée pour être utilisée au sein d'un site de stockage longue durée, dans lequel les emballages de stockage sont entreposés verticalement, rendant leur encombrement optimisé. De façon avantageuse, elle reste également adaptée lorsque le site de stockage à la verticale dispose d'une hauteur sous crochet de pont de levage limitée, interdisant un transfert selon une direction verticale de l'étui, et ceci que le site soit à ciel ouvert ou fermé vers le haut, comme cela est le cas pour les sites dits halls de stockage longue durée.

De préférence, l'emballage de stockage comprend des moyens de ventilation permettant une circulation d'air entre ladite cavité d'étui et l'extérieur de l'emballage, cette circulation d'air permettant de collecter et d'évacuer une partie de la chaleur dégagée par les matières radioactives contenues dans l'étui.

Par ailleurs, ledit corps d'emballage présente une épaisseur d'au moins 200 mm, en vue de sa protection physique. A cet égard, il est noté qu'un tel emballage de stockage longue durée ne nécessite pas, contrairement aux emballages de transport/stockage, de satisfaire les exigences réglementaires de sûreté pour le transport de matières nucléaires sur voie publique, notamment les épreuves dites de chute libre sur cible indéformable, particulièrement contraignantes. En revanche, la conception d'un emballage de stockage doit habituellement lui permettre de conserver l'intégrité de l'étui suite à un crash d'avion, suivi d'un feu, ou encore lors d'un séisme.

Un autre objet de l'invention concerne un site de stockage longue durée pour matières radioactives, ledit site comprenant une pluralité d'emballages de stockage longue durée tels que présentés ci-dessus, chacun logeant un étui contenant des matières radioactives, et étant entreposé dans une position verticale avec ledit couvercle de tête amovible orienté vers le haut.

Il comprend de préférence en outre un pont de levage/manutention des emballages, ces derniers disposant d'une hauteur maximale (He), ledit pont disposant d'un crochet définissant une hauteur maximale sous crochet (Hsc), et le rapport (Hsc)/(He) étant inférieur strictement à 2, interdisant un transfert selon une direction verticale de l'étui.

Il comprend en outre de préférence un châssis de pivotement des emballages, permettant de faire pivoter chacun des emballages de stockage de la position horizontale à la position verticale. Ainsi, les emballages de stockage peuvent donc être chargés de leurs étuis respectifs à l'horizontale, puis basculés grâce au châssis de pivotement dans la position verticale de stockage.

De préférence, le site est un hall de stockage longue durée fermé vers le haut, bien qu'il pourrait alternativement s'agir d'un site à ciel ouvert, sans sortir du cadre de l'invention.

Enfin, l'invention a également pour objet un procédé de transfert d'un étui contenant des matières radioactives, d'un emballage de transfert vers un emballage de stockage longue durée tel que celui décrit ci-dessus, le procédé comportant les étapes successives suivantes consistant à :
- amener chacun desdits emballage de stockage et emballage de transfert en position horizontale ;
- retirer un couvercle de tête amovible dudit emballage de transfert, ainsi que ledit couvercle de fond amovible dudit emballage de stockage ;
- introduire ledit étui dans ladite cavité de l'emballage de stockage, à travers ladite extrémité basse dudit corps d'emballage, laissée libre par le retrait dudit couvercle de fond amovible ;
- refermer ladite extrémité basse dudit corps d'emballage, par remise en place dudit couvercle de fond amovible sur ledit corps d'emballage logeant l'étui ; et
- basculer ledit emballage de stockage en position verticale, de sorte que ledit fond d'emballage soit en regard d'un sol.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un site de stockage longue durée pour matières radioactives, selon un mode de réalisation préféré de la présente invention ;
- la figure 2 représente une vue de dessus du site montré sur la figure 1 ;
- la figure 3 représente une vue en perspective partiellement éclatée, montrant un emballage de stockage longue durée chargé d'un étui contenant des matières radioactives, selon un mode de réalisation préféré de la présente invention ;
- la figure 4 représente une vue partielle en perspective de l'emballage montré sur la figure 3, avec un angle de vue différent, l'étui et le fond amovible de l'emballage ayant été retirés pour des raisons de clarté ; et
- les figures 5a à 5h représentent des vues de côté schématisant différentes étapes successives d'un procédé de transfert d'un étui contenant des matières radioactives, selon un mode de réalisation préféré de la présente invention.

### EXPOSÉ DÉTAILLÉ DE MODES DE RÉALISATION PRÉFÉRÉS

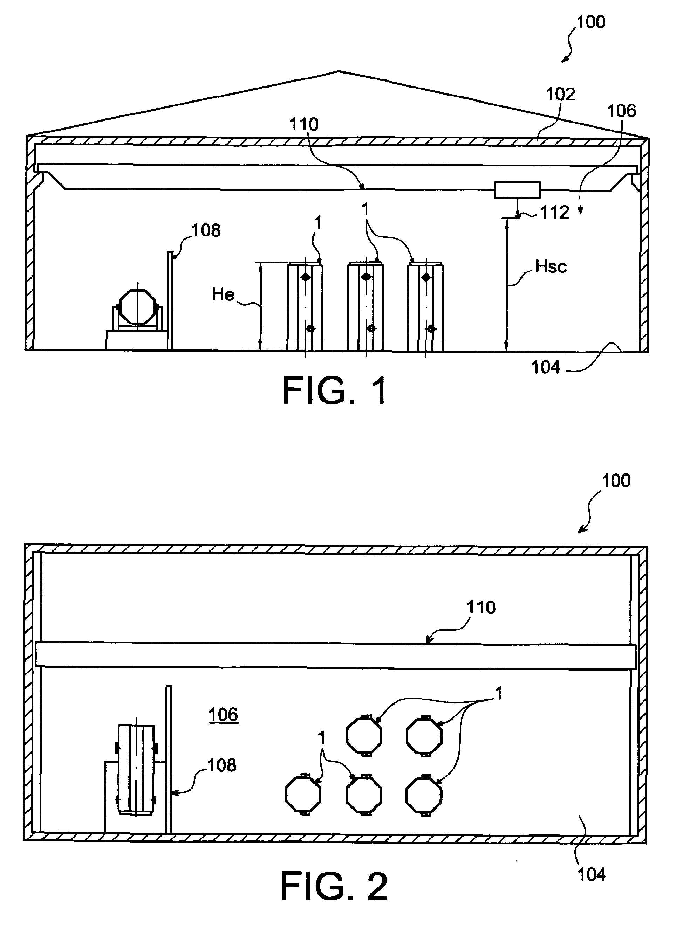

En référence tout d'abord aux figures 1 et 2, on peut apercevoir un site de stockage longue durée 100 pour matières radioactives, selon un mode de réalisation préféré de la présente invention. Le site 100 est fermé vers le haut par un plafond 102, qui lui fait prendre la forme d'un « hall de stockage », dans lequel les matières radioactives sont destinées à être stockées durant une longue période d'environ vingt à soixante ans.

Le hall 100 présente un sol 104 sur lequel reposent verticalement une pluralité d'emballages de stockage longue durée 1, également objets de la présente invention, qui seront détaillés ci-après. D'une manière générale, il est indiqué que chacun d'eux loge un étui contenant des matières radioactives tels que des assemblages de combustible nucléaire irradiés, l'emballage et l'étui étant entreposés dans une position verticale avec le couvercle de tête amovible de l'emballage et la tête d'étui orientés vers le haut, en direction du plafond 102. A titre indicatif, la tête de l'étui se distingue généralement du fond de cet étui par la présence d'au moins un orifice de contrôle au niveau de son couvercle, permettant le contrôle de l'étanchéité de l'étui. De plus, le fond de l'étui est habituellement réalisé d'un seul tenant avec le corps latéral de l'étui, alors que sa tête prend la forme d'un couvercle rapporté sur ce même corps latéral, après introduction des matières radioactives (

Cette façon de stocker verticalement les emballages 1 permet d'optimiser fortement l'encombrement de l'espace de stockage 106 situé entre le sol 104 et le plafond 102, et donc de maximiser le nombre d'emballages 1 susceptibles d'être stockés simultanément dans cet espace 106. De préférence et à titre indicatif, les emballages 1 sont stockés en rangées parallèles.

D'autre part, le hall 100 est équipé d'un châssis 108 de pivotement des emballages, permettant de faire pivoter chacun des emballages de stockage de la position horizontale à la position verticale lors de l'opération de transfert de l'étui associé, comme cela sera détaillé ci-après.

En outre, le hall 100 comprend un pont de levage/manutention des emballages, référencé 110, permettant en particulier de déplacer les emballages 1 au sein de l'espace de stockage 106, tout en les maintenant en position verticale.

De manière classique, le pont 110 dispose d'un crochet 112, définissant une hauteur maximale sous crochet Hsc. Par ailleurs, chaque emballage 1 dispose d'une hauteur maximale He, de préférence toujours identique. A titre indicatif, cette hauteur He est considérée selon la direction de l'axe longitudinal de l'emballage, cette dernière étant parallèle à la verticale lorsque l'emballage est entreposé pour une longue durée dans l'espace 106.

L'une des particularités de la présente invention réside dans le fait que le rapport entre les hauteurs Hsc et He est inférieur strictement à 2, et de préférence comprise entre 1,5 et 1,9. Cette spécificité, rendant le hall de hauteur raisonnable, traduit néanmoins le fait que le transfert à la verticale d'un étui vers son emballage de stockage, au sein de l'espace de stockage 106, est rendu impossible par la trop faible hauteur restante au-dessus de ce même emballage de stockage destiné à recevoir l'étui, et reposant verticalement sur le sol 104.

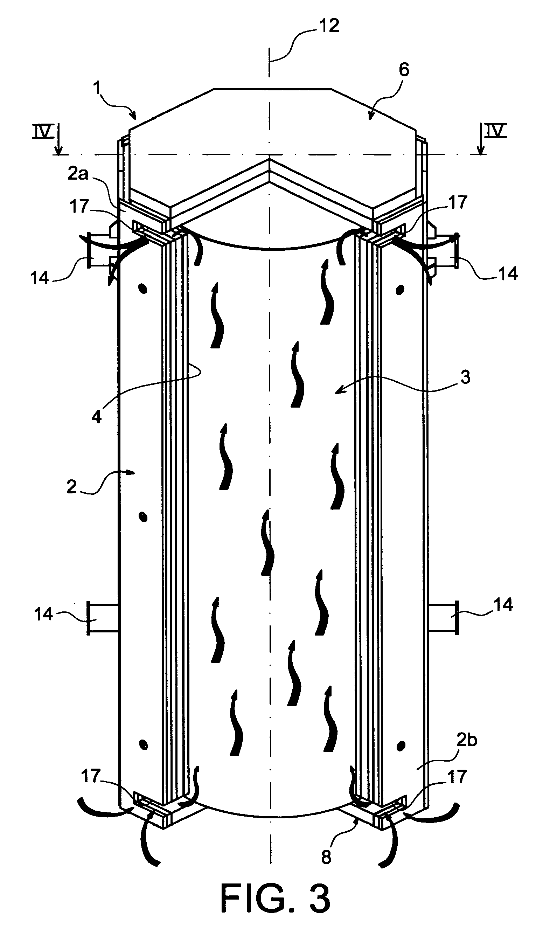

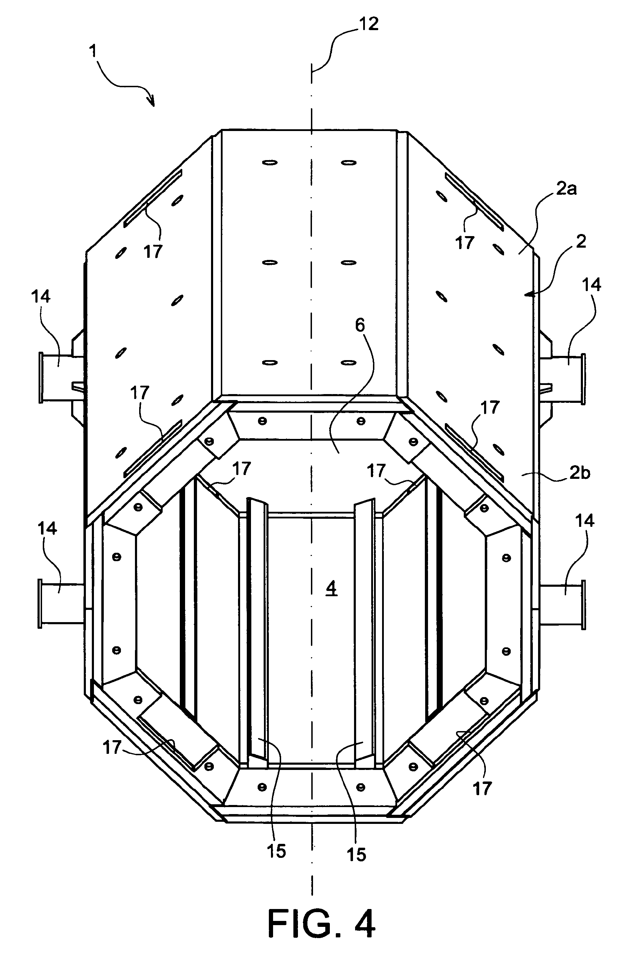

Pour assurer un transfert des étuis au sein du hall de stockage 100, malgré la faible hauteur libre au-dessus des emballages, il est prévu que ces derniers disposent d'une conception particulière, spécifique à la présente invention, qui va maintenant être exposée en référence aux figures 3 et 4.

En référence tout d'abord aux figures 3 et 4, il est représenté un emballage de stockage longue durée 1 destiné à recevoir un étui 3 contenant des matières radioactives, cet emballage se présentant sous la forme d'un mode de réalisation préféré de la présente invention.

L'emballage 1 comporte globalement un corps latéral creux d'emballage 2 de forme cylindrique et définissant une cavité 4 pour recevoir l'étui 3, un couvercle de tête amovible 6 fermant la cavité 4 au niveau d'une extrémité haute 2a du corps 2, ainsi qu'un fond d'emballage 8 fermant la cavité 4 au niveau de l'autre extrémité du corps latéral 2, dite extrémité basse 2b.

Comme cela est connu de l'homme du métier, dans un tel emballage de stockage longue durée, d'axe longitudinal 12, la cavité 4 ne constitue pas une enceinte de confinement pour les matières radioactives, cette enceinte étant effectivement définie par l'étui lui-même. Néanmoins, la conception de cet emballage assure les fonctions habituelles de protection neutronique, de protection contre le rayonnement gamma, et de résistance mécanique. Pour ce faire, on peut notamment prévoir que l'épaisseur du corps latéral creux 2 soit d'au moins 200 mm, et réalisé en acier.

L'une des particularités de la présente invention consiste à prévoir que le fond d'emballage 8 prend la forme d'un couvercle de fond amovible, qui est par conséquent assemblé de manière réversible sur le corps latéral 2, par exemple par boulonnage ou équivalent. Comme cela sera détaillé ci-après, cela permet, lors d'un procédé de transfert d'étui, d'introduire ce dernier par l'extrémité basse 2b du corps d'emballage 2.

L'emballage 1 comprend par ailleurs une pluralité d'organes de manutention 14, également dits tourillons de manutention, destinés à coopérer avec un palonnier (non représenté) suspendu au crochet 112 du pont de levage 110 pour permettre la mise en mouvement de l'emballage. Ils sont de préférence au nombre de quatre ou plus, répartis à proximité des extrémités haute et basse du corps latéral 2, duquel ils font saillie radialement vers l'extérieur.

Par ailleurs, l'emballage 1 comprend des moyens de ventilation permettant une circulation d'air par convection entre la cavité 4 et l'extérieur de l'emballage, lorsque celui-ci est en position verticale. Ces moyens spécifiques, assurant une circulation d'air permettant de collecter et d'évacuer une partie de la chaleur dégagée par les matières radioactives contenues dans l'étui, peuvent être réalisés de toute façon connue de l'homme du métier.

A titre indicatif, des passages traversants 17 peuvent être pratiqués au niveau des extrémités supérieure et inférieure de l'emballage, de manière à faire communiquer l'extérieur de ce dernier avec la cavité 4. Ces passages traversants 17 peuvent par exemple être réalisés sur les extrémités haute 2a et basse 2b du corps 2, comme le montrent les figures 3 et 4.

Ainsi, comme cela est schématisé par les flèches sur ces mêmes figures, l'air extérieur transite à travers le corps d'emballage 2 via les passages traversants 17 de l'extrémité basse 2b, pour ensuite pénétrer au sein d'un espace annulaire libre entre l'étui 3 et la paroi interne de la cavité 4.

A partir de cet instant, l'air collecte de la chaleur dégagée par les matières radioactives contenues dans l'étui, et chemine vers le haut en raison de son réchauffement. Tout le long de son cheminement vers le haut, l'air épousant l'étui collecte donc de la chaleur dégagée par les matières radioactives, pour ensuite l'évacuer en s'échappant de l'espace annulaire par les passages traversants 17 de l'extrémité haute 2a. L'air sortant de ces passages 17 rejoint alors l'environnement extérieur de l'emballage, étant par ailleurs noté que le phénomène qui vient d'être explicité se produit de manière continue.

Enfin, la figure 4 sur laquelle le couvercle de fond amovible a été retiré, montre que la surface intérieure délimitant la cavité 4 est équipée de moyens permettant d'aider l'étui à coulisser par rapport au corps latéral 2 lors de son introduction dans la cavité 4, ces moyens prenant par exemple la forme de rampes/rails parallèles 15 s'étendant selon la direction de l'axe longitudinal 12, correspondant également à la direction de coulissement de l'étui.

A cet égard, l'invention se rapporte également à un procédé de transfert d'un tel étui 3 contenant des matières radioactives, d'un emballage de transfert à fond fixe vers la cavité 4 d'un emballage de stockage longue durée 1 qui vient d'être décrit. A titre indicatif, il est noté que l'emballage de transfert peut être un emballage conçu uniquement pour assurer un tel transfert de l'étui sur un même site nucléaire, par exemple entre le réacteur nucléaire et le site stockage longue durée, cet emballage n'étant alors pas conçu pour emprunter la voie publique, ou plus préférentiellement un emballage de transport de matières radioactives spécialement conçu pour emprunter la voie publique, comme cela est connu de l'homme du métier.

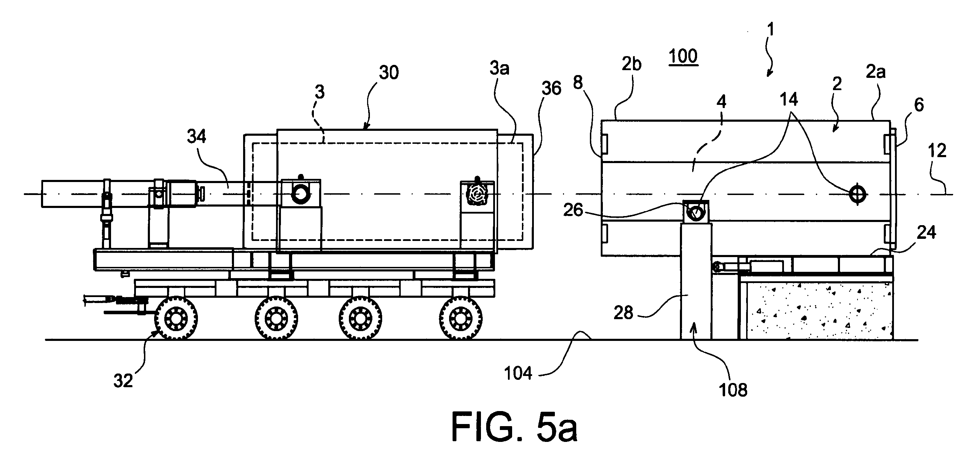

Les figures 5a à 5h représentent différentes étapes successives d'un procédé de transfert selon un mode de réalisation préféré de la présente invention.

Comme on peut l'apercevoir sur la figure 5a, l'emballage de stockage longue durée 1 est en attente dans le hall 100, sur le châssis de pivotement 108, en position horizontale. Le corps latéral 2 est en appui sur une plateforme 24 du châssis 108, tandis que chacun des deux tourillons inférieurs 14 est logé dans un réceptacle ouvert 26 défini à l'extrémité supérieure d'un bras de pivotement vertical 28 du châssis.

A cet instant, les deux couvercles 6 et 8 sont montés sur le corps 2, fermant ainsi la cavité vide 4.

Par ailleurs, un emballage de transfert 30 contenant l'étui 3 à transférer est amené en regard du couvercle de fond amovible 8, à l'aide d'un véhicule de transport 32 sur lequel l'emballage de transfert 30 repose horizontalement, avec la tête d'étui 3a orientée en direction du couvercle de fond amovible 8. La mise en regard et à distance des deux emballages 30, 1 est réalisée de telle sorte que leurs axes longitudinaux respectifs 34, 12 soient sensiblement confondus, comme le montre la figure 5a.

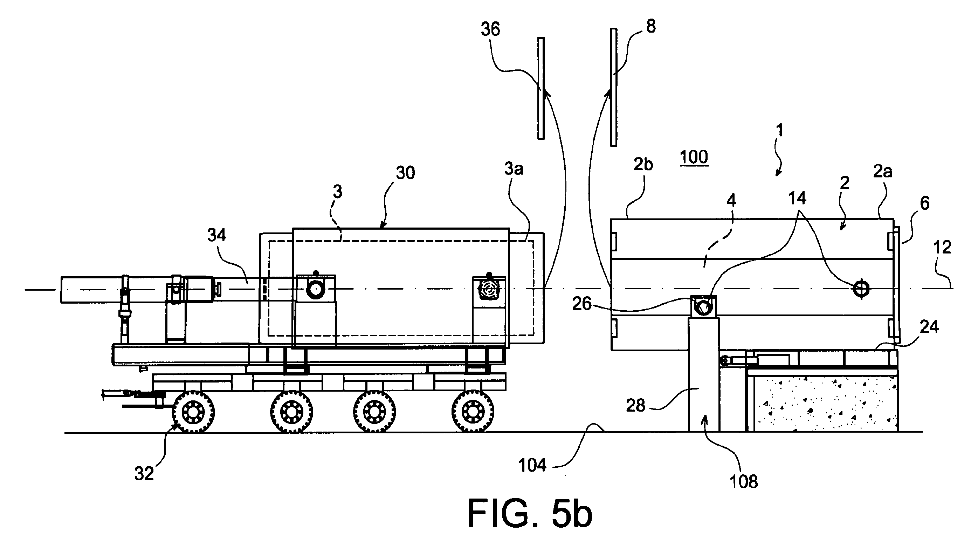

L'étape suivante schématisée sur la figure 5b consiste à retirer le couvercle de tête amovible 36 de l'emballage de transfert 30, ainsi qu'à retirer le couvercle de fond amovible 8 de l'emballage de stockage 1. Ensuite, le véhicule 32 classique et connu de l'homme du métier est déplacé de manière à ce que l'emballage de transfert 30 vienne accoster l'emballage de stockage 1, par mise en contact de la tête de l'emballage 30 avec l'extrémité basse 2b du corps 2 de l'emballage 1.

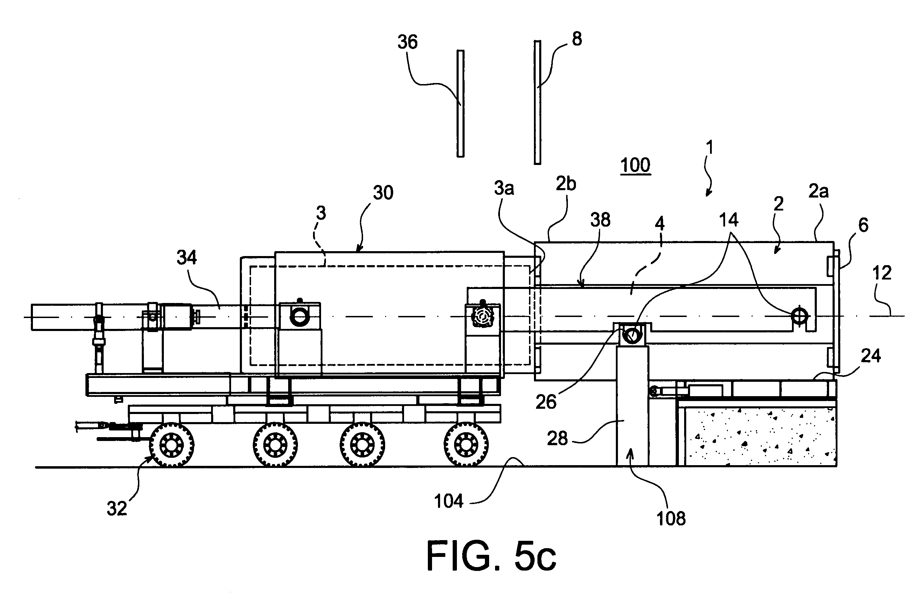

Une fois le contact établi, l'arrimage peut s'effectuer un reliant mécaniquement les tourillons de manutention des deux emballages, par exemple à l'aide de poutres 38 présentant des échancrures pour le logement des tourillons. A titre d'exemple indicatif et comme montré sur la figure 5c, chaque poutre 38 (une seule visible en raison de la vue de côté) peut coopérer avec un tourillon supérieur de l'emballage 30, et un tourillon supérieur 14 de l'emballage 1.

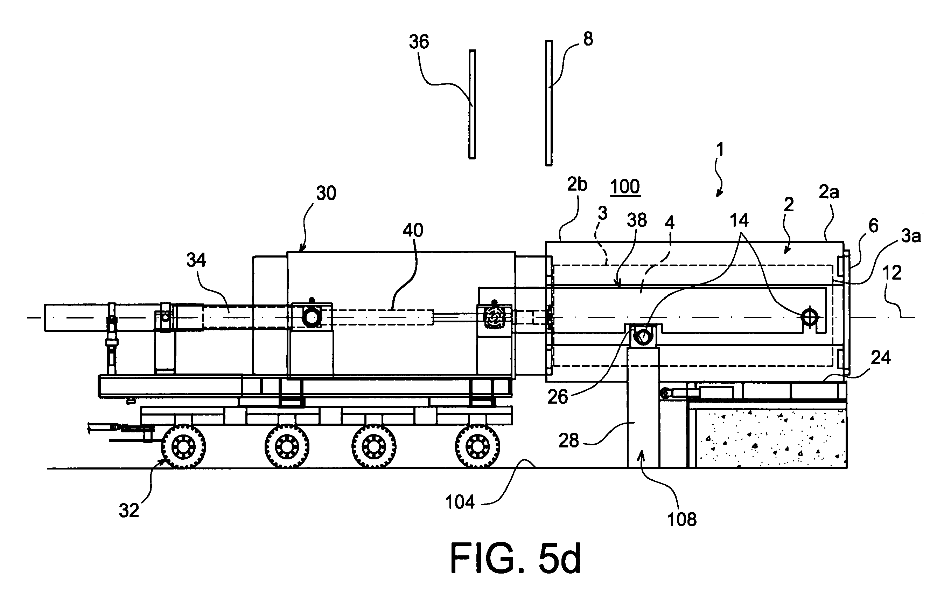

L'étape suivante consiste à introduire l'étui 3 dans la cavité 4, à travers l'extrémité basse 2b du corps d'emballage 2, laissée libre par le retrait du couvercle de fond amovible 8. Pour ce faire, des moyens de mise en mouvement sont actionnés, tel qu'un bras télescopique 40 agencé sur le véhicule 32 et entraînant le déplacement par poussée de l'étui dans la direction des axes longitudinaux 12, 34. Ce déplacement conduit en effet l'étui 3 à pénétrer progressivement au sein de la cavité 4 avec sa tête 3a vers l'avant, comme cela est montré sur la figure 5d. De plus, en fin de déplacement de l'étui restant toujours horizontal, la tête d'étui 3a se trouve située au niveau de l'extrémité haute 2a du corps d'emballage, en regard du couvercle de tête amovible 6 resté à demeure sur l'emballage 1. A titre indicatif, durant le déplacement horizontal de l'étui 3, son glissement au sein du corps latéral 2 est facilité par la présence des rampes précitées sur lesquelles il repose.

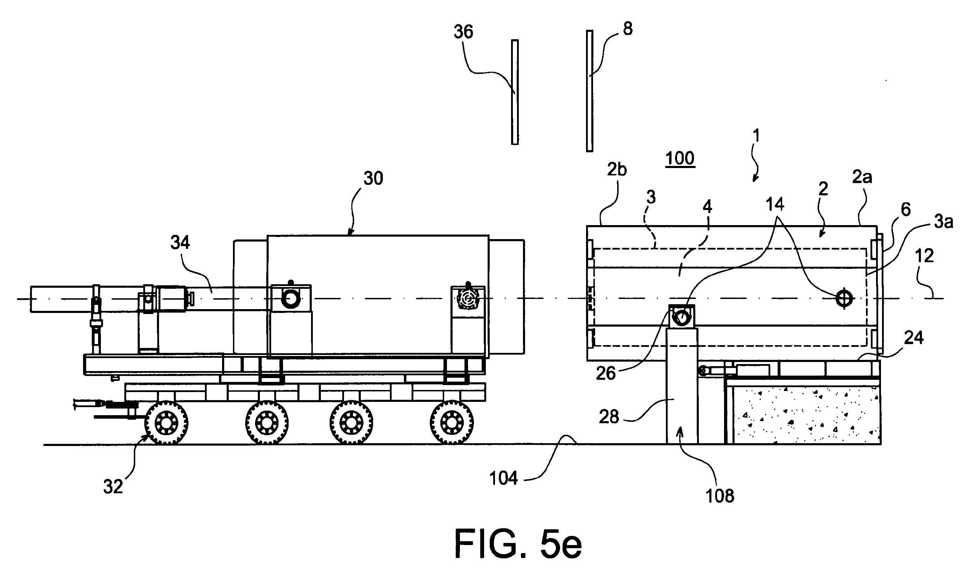

Ensuite, l'arrimage et l'accostage sont rompus, avant que le véhicule 32 ne soit reculé pour écarter l'emballage 30 de l'emballage de stockage 1 nouvellement chargé de l'étui 3, comme schématisé sur la figure 5e.

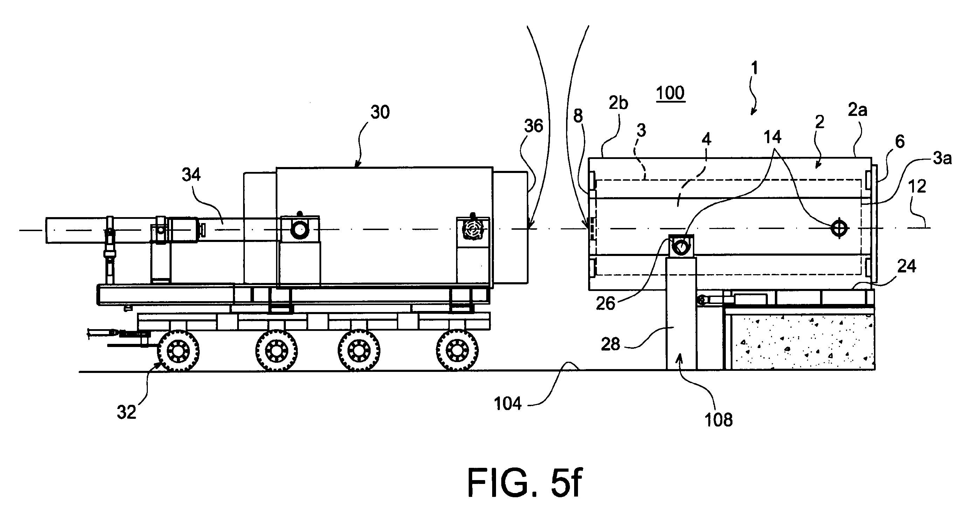

L'étape suivante consiste à refermer l'extrémité basse 2b du corps d'emballage 1, par remise en place du couvercle de fond amovible 8 sur le corps d'emballage 2 logeant l'étui, et à refermer l'extrémité haute de l'emballage 30, par remise en place du couvercle de tête amovible 36 sur ce même emballage vide 30, comme schématisé sur la figure 5f.

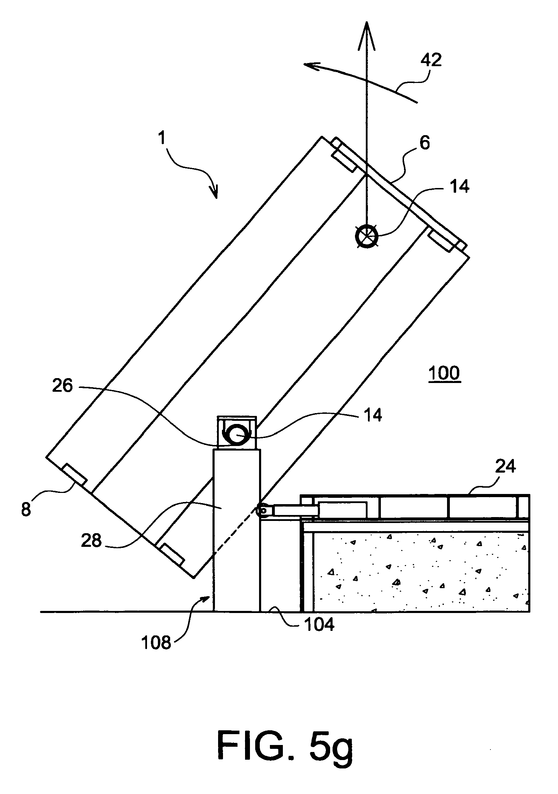

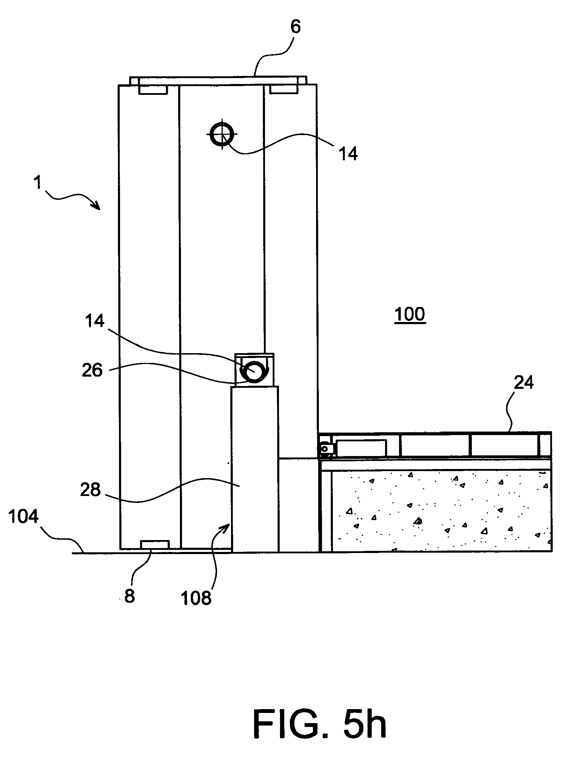

La figure 5g montre une étape ultérieure consistant à faire basculer l'emballage de stockage 1 en position verticale, de sorte que le fond d'emballage 8 se retrouve en regard du sol 104 du hall. Pour ce faire, le pont de levage (non représenté sur cette figure) coopère avec les tourillons supérieurs 14, tandis que les tourillons inférieurs 14 sont eux toujours logés dans leurs réceptacles respectifs 26. La mise en mouvement du pont de levage permet de faire pivoter l'emballage 1 selon l'axe commun de ses tourillons inférieurs 14 toujours en appui dans leurs réceptacles, comme cela est schématisé par la flèche 42. Avec ce mouvement de pivotement de l'emballage 1, sa tête est alors progressivement amenée vers le haut, jusqu'à ce que cet emballage adopte la position verticale montrée sur la figure 5h, dans laquelle à la fois le couvercle de tête 6 et la tête de l'étui sont orientés vers le haut, c'est-à-dire vers le plafond du hall.

Le pont de levage peut ensuite continuer la mise en mouvement de l'emballage 1 chargé de l'étui, afin de l'amener dans sa position de stockage au sein de l'espace de stockage, toujours en le maintenant suspendu par ses tourillons supérieurs 14 lui assurant un déplacement en position verticale.

Le même procédé de transfert peut ensuite être réitéré pour un emballage de stockage suivant, après qu'il ait été placé sur le châssis de pivotement 108 en position horizontale.

A titre indicatif, il est noté que l'homme du métier, en présence d'un emballage selon l'invention, est parfaitement capable de faire la distinction entre les éléments suivants : extrémités haute et basse du corps d'emballage, tête et fond du corps d'emballage, même lorsque l'emballage ne repose pas en position verticale de stockage. En effet, ces éléments disposent chacun d'une conception permettant à l'homme du métier de les reconnaître, quelle que soit la position de l'emballage.

A titre d'exemples indicatifs, des tourillons de manutention sont prévus à la fois au niveau de l'extrémité haute et de l'extrémité basse du corps d'emballage. Ceux prévus sur l'extrémité basse sont généralement décalés par rapport à l'axe longitudinal de l'emballage de sorte que l'axe des tourillons et l'axe longitudinal de l'emballage ne sont pas sécants, tel que montré sur les figures 1 et 5a à 5g, pour faciliter le basculement de ce dernier dans une direction privilégiée, autour des l'axe de ces tourillons associés à l'extrémité basse. Cela n'est en revanche pas le cas pour les tourillons associés à l'extrémité haute, dont les axes passent généralement par l'axe longitudinal de l'emballage.

Par ailleurs, l'emballage est généralement pourvu d'orifices en partie « haute », pour permettre le passage de câbles et/ou autres dispositifs pour le contrôle de l'étanchéité de l'étui.

Enfin, l'homme du métier peut facilement faire la différence entre le couvercle amovible et le fond amovible, en particulier lorsque le fond amovible est encastré dans le corps d'emballage afin d'éviter un appui direct de l'emballage sur ce même fond, en position verticale, ce qui peut être dommageable pour le dispositif de fixation du fond. Dans un tel cas, afin de ne pas être sollicité en position verticale de l'emballage, le fond ne fait donc pas saillie du corps d'emballage vers l'extérieur, selon l'axe longitudinal. En revanche, le couvercle est quant à lui en général en saillie vers l'extérieur selon l'axe longitudinal, par rapport à l'extrémité haute du corps d'emballage, comme on peut d'ailleurs le voir sur la figure 3.Bien entendu, diverses modifications peuvent être apportées par l'homme du métier à l'invention qui vient d'être décrite, uniquement à titre d'exemples non limitatifs.

## Revendications

1. Emballage de stockage longue durée (1) destiné à recevoir un étui (3) contenant des matières radioactives, ledit emballage comportant un corps latéral (2) délimitant une cavité (4) pour recevoir l'étui, ledit corps d'emballage étant fermé à son extrémité haute (2a) et à son extrémité basse (2b) respectivement par un couvercle de tête amovible (6), et par un fond d'emballage,
**caractérisé en ce que** ledit fond d'emballage prend la forme d'un couvercle de fond amovible (8), permettant l'introduction de l'étui (3) par l'extrémité basse (2b) dudit corps d'emballage (2), avec la tête de l'étui orientée vers l'avant dans le sens de déplacement de celui-ci.

2. Emballage (1) selon la revendication 1, **caractérisé en ce qu'**il comprend des moyens de ventilation permettant une circulation d'air entre la ladite cavité (4) et l'extérieur de l'emballage.

3. Emballage (1) selon l'une quelconque des revendications précédentes, **caractérisé en ce que** ledit corps d'emballage (2) présente une épaisseur d'au moins 200 mm.

4. Site de stockage longue durée (100) pour matières radioactives, ledit site comprenant une pluralité d'emballages de stockage longue durée (1) selon l'une quelconque des revendications précédentes, chacun logeant un étui (3) contenant des matières radioactives, et étant entreposé dans une position verticale avec ledit couvercle de tête amovible (6) orienté vers le haut.

5. Site (100) selon la revendication 4, **caractérisé en ce qu'**il comprend en outre un pont de levage/manutention (110) des emballages, ces derniers disposant d'une hauteur maximale (He), ledit pont disposant d'un crochet (112) définissant une hauteur maximale sous crochet (Hsc), et **en ce que** le rapport (Hsc)/(He) est inférieur strictement à 2.

6. Site (100) selon la revendication 5, **caractérisé en ce qu'**il comprend en outre un châssis de pivotement (108) des emballages, permettant de faire pivoter chacun des emballages de stockage (1) de la position horizontale à la position verticale.

7. Site (100) selon l'une quelconque des revendications 4 à 6, **caractérisé en ce qu'**il est un hall de stockage longue durée fermé vers le haut.

8. Procédé de transfert d'un étui contenant des matières radioactives, d'un emballage de transfert vers un emballage de stockage longue durée selon l'une quelconque des revendications 1 à 3, **caractérisé en ce qu'**il comporte les étapes successives suivantes consistant à :
- amener chacun desdits emballage de stockage et emballage de transfert en position horizontale ;
- retirer un couvercle de tête amovible dudit emballage de transfert, ainsi que ledit couvercle de fond amovible dudit emballage de stockage ;
- introduire ledit étui dans ladite cavité de l'emballage de stockage, à travers une extrémité basse dudit corps d'emballage, laissée libre par le retrait dudit couvercle de fond amovible ;
- refermer ladite extrémité basse dudit corps d'emballage, par remise en place dudit couvercle de fond amovible sur ledit corps d'emballage logeant l'étui ; et
- basculer ledit emballage de stockage en position verticale, de sorte que ledit fond d'emballage soit en regard d'un sol.

## Patentansprüche

1. Behälter (1) zur Langzeitlagerung, bestimmt zur Aufnahme einer radioaktive Materialien enthaltenden Kapsel (3), wobei der genannte Behälter ein einen Hohlraum (4) zur Aufnahme der Kapsel begrenzendes Seitengehäuse (2) umfasst und das genannte Seitengehäuse an seinem oberen Ende (2a) und an seinem unteren Ende (2b) jeweils durch einen abnehmbaren Kopfdeckel (6) und durch einen Behälterboden verschlossen wird,
**dadurch gekennzeichnet, dass** der genannte Behälterboden die Form eines abnehmbaren Bodendeckels (8) annimmt, der das Einführen der Kapsel (3) durch das untere Ende (2b) des genannten Behältergehäuses (2) ermöglicht, mit bezüglich ihrer Bewegungsrichtung nach vorn gerichtetem Kopf der Kapsel.

2. Behälter (1) nach Anspruch 1, **dadurch gekennzeichnet, dass** er Ventilationseinrichtungen umfasst, die eine Luftzirkulation zwischen dem genannten Hohlraum (4) und der Außenseite des Behälters ermöglichen.

3. Behälter (1) nach einem der vorhergehenden Ansprüche, **dadurch gekennzeichnet, dass** das genannte Behältergehäuse (2) eine Dicke von wenigstens 200 mm hat.

4. Standort (100) zur Langzeitlagerung von radioaktiven Materialien, wobei der genannte Standort eine Vielzahl von Langzeitlagerungsbehältern (1) nach einem der vorhergehenden Ansprüche umfasst, von denen jeder eine mit radioaktiven Materialien gefüllte Kapsel (3) enthält und zwisehengelagert ist in einer vertikalen Position, den genannten abnehmbaren Kopfdeckel (6) nach oben gerichtet.

5. Standort (100) nach Anspruch 4, **dadurch gekennzeichnet, dass** er außerdem eine Hebe-/Handhabungsbühne (110) der Behälter umfasst, wobei - wenn diese Letzteren eine Maximalhöhe (He) haben -, die genannte Bühne eine Maximalhöhe (Hsc) unter dem Haken aufweist, wobei das Verhältnis (Hsc) / (He) strikt kleiner als 2 ist.

6. Standort (100) nach Anspruch 5, **dadurch gekennzeichnet, dass** er außerdem ein Gestell (108) zum Schwenken der Behälter umfasst, das ermöglicht, jeden der Lagerungsbehälter (1) aus der horizontalen Position in die vertikale Position zu schwenken.

7. Standort (100) nach einem der Ansprüche 4 bis 6, **dadurch gekennzeichnet, dass** er eine nach oben geschlossene Langzeitlagerungshalle ist.

8. Verfahren zum Transfer einer radioaktive Materialien enthaltenden Kapsel in einen Langzeitlagerungsbehälter nach einem der Ansprüche 1 bis 3, **dadurch gekennzeichnet, dass** es die folgenden sukzessiven Schritte umfasst
- jeden der genannten Lagerungsbehälter und Transferbehälter in eine horizontale Position bringen;
- einen abnehmbaren Kopfdeckel von dem genannten Transferbehälter sowie den genannten Bodendeckel von dem genannten Lagerungsbehälter zu entfernen ;
- Einführen der genannten Kapsel durch ein unteres Ende des genannten Verpackungsgehäuses, das durch das Entfernen des genannten abnehmbaren Bodendeckels frei bzw. offen ist;
- Wiederverschließen des genannten unteren Endes des genannten Verpackungsbehälters durch das Wiederanbringen des genannten abnehmbaren Bodendeckels an dem genannten die Kapsel enthaltenden Verpackungsgehäuse; und
- Kippen des genannten Lagerungsbehälters in die vertikale Position, so dass der genannte Verpackungsboden einem Boden gegenübersteht.

## Claims

1. Long-term storage package (1) intended to receive a case (3) containing radioactive materials, said package comprising a lateral body (2) delimiting a housing (4) for receiving the case, said package body being closed at its top end (2a) and at its low end (2b) respectively by a removable head cover (6), and by a package base,
**characterised in that** said package base takes the form of a removable base cover (8), allowing the insertion of the case (3) via the low end (2b) of said package body (2), with the head of the case oriented to the front in the direction of movement thereof.

2. The package (1) as claimed in Claim 1, **characterised in that** it comprises ventilation means for circulation of air between said case housing (4) and the exterior of the package.

3. The package (1) as claimed in any one of preceding claims, **characterised in that** said package body (2) has a thickness of at least 200 mm.

4. A long-term storage site (100) for radioactive materials, said site comprising a plurality of long-term storage packages (1) as claimed in any one of the preceding claims, each accommodating a case (3) containing radioactive materials, and being stored in a vertical position with said removable head cover (6) oriented at the top.

5. The site (100) as claimed in Claim 4, **characterised in that** it also comprises a lift/handling (110) of the packages, the latter having a maximum height (He), said lift having a hook (112) defining a maximum height to hook (Hsc), and **in that** the (Hsc)/(He) ratio is less than strictly 2.

6. The site (100) as claimed in Claim 5, **characterised in that** it also comprises a pivoting frame (108) of the packages, allowing each of the storage packages (1) to pivot from the horizontal position to the vertical position.

7. The site (100) as claimed in any one of Claims 4 to 6, **characterised in that** it is a long-term storage facility closed at the top.

8. A process for transfer of a case containing radioactive materials, from transfer package to a long-term storage package as claimed in any one of Claims 1 to 3, **characterised in that** it comprises the following successive steps consisting of :
- guiding each said storage package and transfer package into a horizontal position ;
- removing a removable head cover from said transfer package, as well as said removable base cover from said storage package ;
- introducing said case into said housing of the storage package, via said low end of said package body, left free by the removal of said removable base cover ;
- reclosing said low end of said package body, by replacing said removable base cover on said package body accommodating the case ; and
- swinging said storage package in a vertical position, such that said package base is opposite the ground.
